# EUROPÄISCHE PATENTANMELDUNG

(11) **EP 2 921 222 A1**
(43) Veröffentlichungstag der Anmeldung: **23.09.2015**
(21) Anmeldenummer: 14161001.4
(22) Anmeldetag: 21.03.2014
(51) Int. Cl.: B01J 8/18, B01J 8/44, B65D 77/06

(54) **Fluidisierungseinheit für pulverförmige Medien**

(71) Anmelder: BASF Coatings GmbH, 48165 Münster (DE)
(72) Erfinder: Weber, Rolf, 40721 Hilden (DE)

(57) **Zusammenfassung**

Die vorliegende Erfindung betrifft eine Fluidisierungseinheit umfassend eine Kartonage 2, ein innerhalb der Kartonage 2 angeordneter verformbarer Behälter 3 sowie eine innerhalb des verformbaren Behälters 3 angeordnete Fluidisierungsvorrichtung 4, welche ein Behältnis 4a und einen das Behältnis 4a abdeckenden Fluidisierungsboden 4b umfasst, wobei das Behältnis 4a und der Fluidisierungsboden 4b die Außenwände eines Druckraums 4c darstellen, welcher mit Druckluft beaufschlagbar ist, und wobei die Fluidisierungsvorrichtung 4 ferner eine Zuführleitung 4d für Druckluft, welche über den Fluidisierungsboden in den Druckraum mündet, sowie eine den Behälter 4a umspannende Dichtung 4e, die so ausgestaltet ist, dass der Innenraum 5 des verformbaren Behälters 3 in zwei voneinander getrennte Bereiche 5a und 5b getrennt ist, umfasst.

## Beschreibung

Die vorliegende Erfindung betrifft eine Fluidisierungseinheit umfassend eine Fluidisierungsvorrichtung mit einem Druckraum und einem Fluidisierungsboden. Die Fluidisierungseinheit kann neben der Fluidisierung von pulverförmigen Medien, insbesondere Pulverlacken, auch zur Lagerung und zum Transport solcher pulverförmigen Medien dienen, sodass insbesondere aufwendige Umfüllprozesse im Rahmen der Verarbeitungskette von pulverförmigen Medien wegfallen.

Pulverförmige Medien, insbesondere Pulverlacke, haben im Vergleich zu den jeweiligen Konkurrenzprodukten, insbesondere flüssigen und in der Regel organische Lösemittel enthaltenen Produkten, einige nennenswerte Vorteile. Diese Vorteile sind insbesondere darin zu sehen, dass bei der Verarbeitung von Pulverlacken, das heißt der Applikation auf ein Substrat und anschließenden Härtung zur Herstellung von Beschichtungen, der so genannte Overspray nicht unwiderruflich verloren ist, sondern zurückgewonnen werden kann. Anders ist dies bei der Applikation von flüssigen Beschichtungsmitteln, bei denen der Overspray unwiderruflich verloren geht. Als Overspray wird bekanntermaßen der Anteil des Beschichtungsmittels, der bei der Applikation nicht auf dem Substrat abgeschieden wird, sondern durch die Substrat- und Applikationsanlagengeometrie sowie die Anlagentechnik vorgegeben und damit unvermeidlich in der Umgebung verteilt wird. Ein weiterer Vorteil von Pulverlacken liegt offensichtlich in der Vermeidung umweltbelastender organischer Lösemittel.

Jedoch müssen in der pulververarbeitenden Industrie, insbesondere in der Lackbranche bei der Verarbeitung von Pulverlacken, die einzusetzenden Pulver in der Regel vor der eigentlichen Verarbeitung fluidisiert werden. Unter Fluidisierung versteht man bekanntermaßen die Aufbereitung des Pulvers durch Einblasen von Druckluft, wobei ein Pulver-Luft-Gemisch entsteht, welches flüssigkeitsähnliche Eigenschaften hat und dadurch einen förderungsfähigen Zustand besitzt. Dies ist für die angemessene Förderung innerhalb der Leitungssysteme von Applikationsanlagen und damit die Verarbeitung von Pulverlacken entscheidend. Oft wird die Fluidisierung durch Rütteln beziehungsweise Rühren des Pulvers unterstützt.

Die heutzutage verfügbaren Fluidisierungsanlagen sind in der Regel in der Lage, eine den Anforderungen genügende Fluidisierung zu bewirken. Dabei wird ein Pulverlack in einen Behälter (Pulverbehälter) überführt, welcher einen an sich bekannten Fluidisierungsboden aufweist. Unterhalb des Fluidisierungsbodens befindet sich ein Druckraum, welcher mit Druckluft beaufschlagbar ist. Durch den Fluidisierungsboden, das heißt ein Boden der zumindest anteilig aus porösem, von Luft durchströmbarem Material besteht, gelangt die Druckluft dann in den im dafür vorgesehenen Behälter vorhandenen Pulverlack, der auf diese Weise effektiv fluidisiert wird.

Problematisch ist jedoch, dass die aus dem Stand der Technik bekannten Anlagen vergleichsweise groß und sperrig sind beziehungsweise fest installierte Anlagenteile darstellen. Ein Pulverlack muss zunächst aus dem Anlieferungsgebinde in den Pulverbehälter der Fluidisierungsanlage überführt werden, das heißt umgefüllt werden. Dies fordert also einen zusätzlichen Arbeitsschritt. Zudem ist das Problem der intensiven Staubentwicklung beim Umfüllen zu berücksichtigen. Weiterhin nachteilig ist es, dass die fest installierten Anlagen keine Variabilität hinsichtlich des Lackierungsortes zulassen. Die Lackierung muss dort ausgeführt werden, wo auch die fest installierte Fluidisierungsanlage eingerichtet ist. Eine individuellen Umständen Rechnung tragende Lackierung an unterschiedlichen Orten, beispielsweise von bereits an ihrem Bestimmungsort fest installierten Substraten, ist somit nicht möglich.

Bekannt ist in Stand der Technik eine Fluidisierung innerhalb des Anlieferungsgebindes über an sich bekannte Fluidisierungslanzen. Jedoch ist die dabei nur partiell erfolgende Fluidisierung in vielen Fällen nicht ausreichend, um eine den Anforderungen genügende Förderungsfähigkeit des Pulverlacks zu gewährleisten.

Aufgabe der vorliegenden Erfindung war es demzufolge, eine Fluidisierungseinheit bereitzustellen, welche ein pulverförmiges Medium effektiv über einen Fluidisierungsboden fluidisieren kann, dabei aber trotzdem gewährleistet, dass auf Umfüllprozesse verzichtet werden kann und örtlich variabel pulverlackiert werden kann. Die Einheit soll also sowohl der Fluidisierung von pulverförmigen Medien, insbesondere Pulverlacken, als auch der Lagerung und dem Transport solcher Pulverlacke dienen können. Der letztlich zu verarbeitende Pulverlack soll also in dieser Einheit nicht nur gelagert und transportiert werden, sondern auch ohne aufwendige Umfüllprozesse direkt innerhalb der Einheit effektiv über einen Fluidisierungsboden fluidisiert werden. Der dann fluidisierte Pulverlack könnte dann direkt aus der Einheit und damit lokal unabhängig in eine Applikationsanlage überführt werden und somit verarbeitet beziehungsweise appliziert werden.

Gelöst werden konnten diese Aufgaben durch eine Fluidisierungseinheit umfassend eine Kartonage 2, ein innerhalb der Kartonage 2 angeordneter verformbarer Behälter 3 sowie eine innerhalb des verformbaren Behälters 3 angeordnete Fluidisierungsvorrichtung 4, welche ein Behältnis 4a und einen das Behältnis 4a abdeckenden Fluidisierungsboden 4b umfasst, wobei das Behältnis 4a und der Fluidisierungsboden 4b die Außenwände eines Druckraums 4c darstellen, welcher mit Druckluft beaufschlagbar ist, und wobei die Fluidisierungsvorrichtung 4 ferner eine Zuführleitung 4d für Druckluft, welche über den Fluidisierungsboden in den Druckraum mündet, sowie eine den Behälter 4a umspannende Dichtung 4e, die so ausgestaltet ist, dass der Innenraum 5 des verformbaren Behälters 3 in zwei voneinander getrennte Bereiche 5a und 5b getrennt ist, umfasst.

Die erfindungsgemäße Fluidisierungseinheit dient nicht nur dem Transport und der Lagerung von pulverförmigen Medien, sondern zudem auch der Fluidisierung solcher Medien. Insbesondere aufwendige Umfüllprozesse werden vermieden.

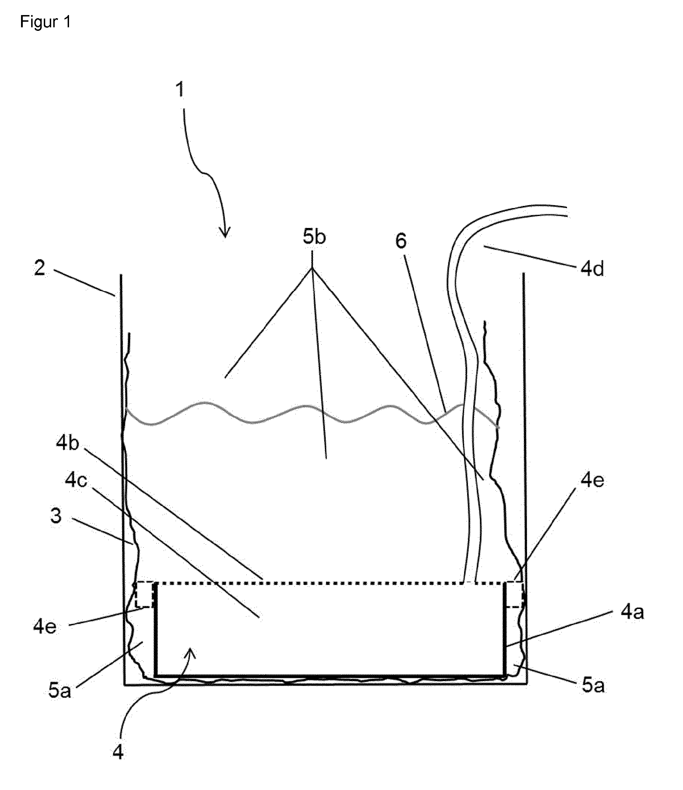

Im Folgenden soll die Erfindung anhand einer Figur 1 erläutert werden. Gleiche Bezugszeichen entsprechen gleichen oder entsprechenden Merkmalen.

Figur 1 zeigt beispielhaft eine erfindungsgemäße Fluidisierungseinheit beziehungsweise einen vertikalen Schnitt durch eine solche Einheit, wobei die erfindungsgemäße Einheit einen Pulverlack enthält. Im Detail zeigt Figur 1 eine erfindungsgemäße Fluidisierungseinheit 1 umfassend eine Kartonage 2, in der sich ein verformbarer Behälter 3 befindet. Innerhalb des verformbaren Behälters 3 befindet sich eine Fluidisierungsvorrichtung 4. Die Vorrichtung 4 umfasst ein Behältnis 4a, welches mit einem Fluidisierungsboden 4b abgedeckt ist. Das Behältnis 4a und der das Behältnis 4a abdeckende Fluidisierungsboden 4b stellen die Außenwände eines Druckraumes 4c, welcher mit Druckluft beaufschlagbar ist, dar. Die Fluidisierungsvorrichtung 4 umfasst ferner eine Zuführleitung 4d für Druckluft, welche über den Fluidisierungsboden in den Druckraum mündet. Zudem umfasst die Vorrichtung 4 eine Dichtung 4e, welche das Behältnis 4a umspannt und so angeordnet ist, dass der Innenraum 5 des verformbaren Behälters 3 in zwei voneinander getrennte Bereiche 5a und 5b getrennt wird. Während der oberhalb der Dichtung 4e angeordnete Innenraum 5b zumindest teilweise mit einen Pulverlack aufgefüllt sein kann (in Figur 1 durch die Oberfläche 6 des Pulverlacks dargestellt), führt die Trennung durch die Dichtung 4e dazu, dass kein beziehungsweise ein nur geringfügiger Anteil des Pulverlacks in den Innenraum 5a gelangen kann.

Die Einheit 1 umfasst eine Kartonage 2. Der Begriff Kartonage wird im Zusammenhang mit der vorliegenden Erfindung wie folgt verstanden. Es handelt sich ganz allgemein um eine wie an sich bekannte Verpackung beziehungsweise Emballage. Diese Verpackung umhüllt also den darin enthaltenen verformbaren Behälter 3 und damit auch die Fluidisierungsvorrichtung 4. Als Material für die Verpackung 2 kommen an sich bekannte Verpackungsmaterialien in Betracht, beispielsweise Kunststoff und Karton beziehungsweise Pappe. Bevorzugt besteht die Kartonage 2 allerdings aus Karton, das heißt es handelt sich der allgemeinen Definition von Kartonage folgend um eine Kartonverpackung. Die Kartonage 2 kann an sich als beliebige Verpackung geformt sein, das heißt hinsichtlich der Geometrie der Verpackung gibt es keinerlei konkrete Einschränkungen. Möglich ist beispielsweise eine quaderförmige oder auch zylindrische Geometrie. Bevorzugt handelt es sich allerdings, wie beispielsweise in Figur 1 gezeigt, um eine Kartonage, die eine Quaderform, beispielsweise eine Würfelform, besitzt. Dabei kann der Quader an einer Seite offen sein. Bevorzugt ist aber, dass es sich um einen vollständig verschließbaren, sechs Flächen aufweisenden Quader handelt. In der Kartonage sind dann die weiteren Bestandteile der Fluidisierungseinheit vorhanden. Die Kartonage kann dann beispielsweise an einer Seite geöffnet werden, sodass wie weiter unten beschrieben das fluidisierte pulverförmige Medium entnommen werden kann (vergleiche auch Figur 1).

Die Einheit 1 umfasst innerhalb der Kartonage 2 einen verformbaren Behälter 3. Es handelt sich also insbesondere um eine Tüte beziehungsweise einen Beutel. Der Behälter besteht beispielsweise aus Papier oder Kunststoff. Bevorzugt handelt es sich um einen Kunststoffbeutel. Solche Kunststoffbeutel und insbesondere deren Einsatz bei der Verpackung von pulverförmigen Medien wie Pulverlacken sind bekannt. Sie bestehen beispielsweise aus Polyolefinen wie Polyethylen oder Polypropylen, aus Polyvinylchlorid, Polystyrol, Polyestern oder Polycarbonaten, wobei der Kunststoff als Folie konditioniert ist. Solche Kunststofffolien besitzen beispielsweise Schichtdicken von etwa 0,1 Millimetern und sind somit verformbar. Gemein ist diesen Materialien also, dass sie sich in ihrer Form anpassen können, also verformbar sind. Auf diese Weise können sie problemlos in die Kartonage 2 hineingeführt werden, während in den Behälter 3 wiederum problemlos die unten beschriebene Vorrichtung 4 hineingelegt werden kann. Auch ein pulverförmiges Medium kann somit problemlos in den Behälter 3 gefüllt werden. Die Größe und exakte Geometrie des verformbaren Behälters wird selbstverständlich bevorzugt so angepasst, dass sie optimal mit der Größe und Geometrie der Kartonage 2 korrespondiert, das heißt insbesondere die Kartonage annähernd vollständig auszufüllen vermag, jedoch nicht zu groß für die Kartonage ist (vergleich auch Figur 1). Eine solche Anpassung kann auf einfache Weise erfolgen. Der verformbare Behälter 3 kann auch mit einem an sich bekannten und gängigen Verschluss versehen sein, beispielsweise einem Druck- oder Zip-Verschluss. Möglich ist aber auch, den Behälter 3, beispielsweise den Kunststoffbeutel, auf einfache Weise durch einen Verschlussdraht oder ähnliches reversibel zu verschließen. Ein solches Verschließen bietet sich an, um das Austreten eines in der Regel enthaltenen pulverförmigen Mediums zu verhindern.

Die Einheit 1 umfasst innerhalb des verformbaren Behälters 3 eine Fluidisierungsvorrichtung 4. Wie auch aus Figur 1 ersichtlich, ist die Vorrichtung 4, insbesondere das Behältnis 4a dieser Vorrichtung bevorzugt so angeordnet, dass es auf dem Boden der Kartonage steht, wobei selbstverständlich zwischen der Unterseite der Vorrichtung 4, insbesondere des Behältnisses 4a, und der Oberseite des Bodens der Kartonage 2 noch der Kunststoffbeutel 3 angeordnet ist.

Die Fluidisierungsvorrichtung 4 umfasst ein Behältnis 4a und einen das Behältnis 4a abdeckenden Fluidisierungsboden 4b. Das Behältnis 4a besteht bevorzugt aus einem Kunststoffmaterial, beispielsweise einem thermoplastischen Kunststoff wie Acrylnitril-Butadien-Styrol (ABS), Polyamid (PA), Polylactat (PLA), Polymethylmethacrylat (PMMA), Polycarbonat (PC), Polyethylenterephthalat (PET), Polyolefinen wie Polyethylen (PE) und Polypropylen (PP), Polystyrol (PS), Polyetheretherketon (PEEK) und Polyvinylchlorid (PVC), insbesondere bevorzugt Polyolefinen.

Bevorzugt ist das Behältnis 4a (jedenfalls bei nicht erhöhten Temperaturen, das heißt insbesondere bei Temperaturen von kleiner als beispielsweise 50°C) ein starrer beziehungsweise steifer Körper. Solche Behältnisse sind also insbesondere formstabil und unterscheiden sich damit beispielsweise von Kunststoffbeuteln 3. Solche formstabilen Körper können beispielsweise durch Spritzgussverfahren unter Verwendung der oben genannten Thermoplaste hergestellt werden. Die entsprechend notwendigen Bedingungen, um ein starres und formstabiles Behältnis herzustellen, beispielsweise die Schichtdicke der Wände des Behältnisses 4a, können auf bekannte Weise angepasst werden.

Die Geometrie des Behältnisses 4a kann an sich beliebig gewählt werden, solange die Geometrie erlaubt, dass es mit einem wie nachstehend beschriebenen Fluidisierungsboden abgedeckt werden kann. Bevorzugt ist das Behältnis aber ein Quader, bei dem eine Fläche ausgespart ist, das heißt also ein zu einer Seite (nach oben hin) offener Kasten, der demnach fünf Flächen aufweist (vergleiche Figur 1). Bevorzugt ist das Behältnis 4a ein einstückig mittels Spritzgussverfahren geformter Kasten aus einem Thermoplast. Dabei sind die Geometrie und insbesondere auch die Größe des Behältnisses selbstverständlich bevorzugt so angepasst, dass sie optimal mit der Größe und Geometrie der Kartonage 2 und des verformbaren Behälters 3 korrespondieren. Das heißt, das Behältnis 4a ist so ausgestaltet, dass es in dem Behälter 3 angeordnet werden kann und zudem die Grundfläche beziehungsweise den Boden der Kartonage 2 weitestgehend abdeckt (vergleiche Figur 1).

Das Behältnis 4a ist mit einem Fluidisierungsboden 4b abgedeckt. Fluidisierungsböden sind bekannt. Es handelt sich um flächenförmige ausgestaltete Bauelemente, welche zumindest teilweise aus porösem, von Luft durchströmbarem Material bestehen. Bevorzugt bestehen zumindest 90 % der Fläche des Fluidisierungsbodens 4b aus einem solchen porösen Material. Auf diese Weise kann effektiv Luft durch den Boden verströmt werden. Lediglich Randbereiche des Bodens 4b, welche sich in der Nähe beziehungsweise im Kontakt mit dem Behältnis 4a befinden, können beispielsweise aus homogenem, luftundurchlässigem Material ausgestaltet sein, um hierüber beispielsweise eine Verschraubung oder Verklebung der beiden Bauteile miteinander zu ermöglichen. Als poröses Material können bekanntermaßen poröse Polyolefine, poröse Metallsinterstoffe, poröse Keramiken, poröse Duroplasten, poröse mineralische Werkstoffe sowie poröse organische Werkstoffe wie Cellulose-basierte poröse Werkstoffe eingesetzt werden. Bevorzugt sind Fluidisierungsböden, bei denen das poröse Material auf Polyolefinen, insbesondere Polyethylen basiert. Solche porösen Werkstoffe sind beispielsweise unter dem Handelsnamen Poroplast von der Fa. Durst, Deutschland zu erhalten.

Das Behältnis 4a und der das Behältnis 4a abdeckende Fluidisierungsboden 4b stellen die Außenwände eines Druckraumes 4c, welcher mit Druckluft beaufschlagbar ist, dar. Demnach ist das Gesamtkonstrukt aus diesen beiden Bauteilen so ausgestaltet, dass ein erhöhter Druck aufgebaut werden kann und die entsprechende Luft durch den porösen Boden nach oben entweichen kann (vergleiche Figur 1). Dabei können die beiden Bauteile beispielsweise miteinander verklebt oder verschraubt sein, wobei auch noch weitere Bauteile wie Dichtungen, verstärkende Platten oder Ähnliches eingesetzt werden können. In einer bevorzugten Variante werden die Bauteile 4a und 4b im Spritzguss miteinander verbunden. Dies bedeutet, dass der Fluidisierungsboden 4b in die Spritzgussform zur Herstellung des Behältnisses 4a eingefügt wird und dann das Behältnis durch Spritzguss hergestellt wird, wobei dabei eine Verschmelzung und damit Verbindung des Bodens mit dem entstehenden Behältnis stattfindet. Aus oben Gesagten folgt, dass das Behältnis 4a und der Fluidisierungsboden 4b bevorzugt die Außenwände eines quaderförmigen Druckraumes bilden. Dabei ist der Boden 4b dann bevorzugt horizontal angeordnet und bildet die obere Fläche des Quaders aus (die Angaben "horizontal" und "obere Fläche" beziehen sich in diesem Zusammenhang selbstverständlich auf die Orientierung innerhalb einer wie beispielsweise in Figur 2 gezeigten erfindungsgemäßen Fluidisierungseinheit; dasselbe Prinzip gilt insgesamt im Rahmen der vorliegenden Erfindung).

Die Fluidisierungsvorrichtung umfasst ferner eine Zuführleitung 4d für Druckluft, welche über den Fluidisierungsboden in den Druckraum 4c mündet. Dabei kann es sich um eine typische, an sich bekannte Druckluftschlauchleitung handeln, welche auf bekannte Weise an entsprechende Druckluftsysteme angeschlossen werden kann, sodass der Druckraum mit Druckluft beaufschlagt werden kann. Ein besonderer Vorteil der vorliegenden Erfindung liegt in der Anordnung der Zuführleitung 4d. Innerhalb einer Fluidisierungseinheit, die ein pulverförmiges Medium innerhalb des Kunststoffbeutels enthält, kann die Zuführleitung aus diesem Medium herausragen, wobei der herausragende Teil der Leitung 4d aufgerollt und somit innerhalb der geschlossenen Kartonage positioniert werden kann. Nach dem Öffnen der Kartonage, insbesondere der oberen Fläche der Kartonage, kann die Leitung 4d ohne Umstände an eine Druckluftquelle angeschlossen werden und damit direkt mit der Fluidisierung des pulverförmigen Mediums, beispielsweise einem Pulverlack, begonnen werden. Möglich ist dabei natürlich auch, dass zumindest der aufgerollte Teil der Zuführleitung außerhalb des verformbaren Behälters angeordnet ist, sodass dann der Teil der Leitung, der zum Anschluss an eine Druckluftquelle anzufassen ist, nicht mit dem pulverförmigen Medium verschmutzt ist. Trotzdem gilt im Rahmen der vorliegenden Erfindung definitionsgemäß für eine solche Anordnung, dass die Fluidisierungsvorrichtung 4 innerhalb des Behälters 3 angeordnet ist, denn bis auf den genannten Abschnitt der Leitung 4d ist die komplette Vorrichtung 4 innerhalb des Behälters 3 angeordnet.

In einer bevorzugten Ausführungsform ist die Einmündungsstelle der Zuführleitung 4d in den Fluidisierungsboden 4b und damit in den Druckraum 4c im Randbereich des Fluidisierungsbodens angeordnet (vergleiche Figur 1). Damit kann die Zuführleitung innerhalb der Fluidisierungseinheit auf einfache Weise so angeordnet werden, dass sie sich bei der Entnahme eines pulverförmigen Materials, beispielsweise eines Pulverlacks, nicht als hinderlich erweist, das heißt ausreichend Platz zur Verfügung steht, um Förderungsleitungen und Ähnliches in die Einheit einzubringen. Es ist dabei nochmals besonders bevorzugt, wenn die Zuführleitung 4d nicht an der Kontaktstelle mit dem Fluidisierungsboden endet, sondern wenn sie sich bis ins Zentrum des Druckraums 4c erstreckt. Dies wird bevorzugt über ein aus einem formstabilen Material gefertigtem Leitungsabschnitt innerhalb des Druckraums realisiert. Auf diese Weise wir die Druckluft im Zentrum des Druckraums entlassen, sodass die Druckluft über den gesamten Fluidisierungsboden homogen verteilt in den darüber liegenden Pulverlack eindringen kann und eine gleichmäßige Fluidisierung bewirkt werden kann.

Zudem umfasst die Fluidisierungsvorrichtung 4 eine Dichtung 4e, welche das Behältnis 4a umspannt und so angeordnet ist, dass der Innenraum 5 des verformbaren Behälters 3 in zwei voneinander getrennte Bereiche 5a und 5b getrennt wird (vergleiche Figur 1). Der Fluidisierungsboden ist so angeordnet, dass er vollständig im unmittelbaren Kontakt mit dem oberen Bereich des Innenraums 5 steht (in Figur 1 der Bereich 5b). Auf diese Weise wird eine Trennung erreicht, die dafür sorgt, dass der unterhalb der Dichtung 4e liegende Bereich, in welchen nicht auf direkte Weise über den Fluidisierungsboden Druckluft eingeströmt werden kann, bei einem Füllen des Beutels 3 mit einem pulverförmigen Material von diesem Material weitestgehend frei bleibt. Das pulverförmige Material, insbesondere der Pulverlack, verbleibt stattdessen im oberhalb der Dichtung angeordneten Bereich. Auf diese Weise wird kein Pulverlack verschwendet, sondern annähernd der gesamte Pulverlack kann fluidisiert und damit zur Applikation verwendet werden. Lediglich geringe Mengen, die aufgrund einer nicht vollständig idealisierten Abdichtung in den unteren Bereich rieseln können, verbleiben gegebenenfalls ungenutzt. Die Dichtung ist aus für solche Dichtungen gängig eingesetzten Materialien ausgestaltet. Beispielsweise kann die Dichtung aus schäumbaren flexiblen organischen Werkstoffen gefertigt sein. Beispielhaft seien geschäumte flexible Polyurethane, Synthesekautschuk, Naturkautschuk, schäumbare flexible Polyolefine oder auch schäumbare flexible Duroplasten genannt.

In die erfindungsgemäße Fluidisierungseinheit kann ein pulverförmiges Medium, insbesondere ein Pulverlack, eingefüllt werden. Der Pulverlack ist dann innerhalb des verformbaren Behälters 3 und oberhalb der Dichtung 4e angeordnet, liegt also auf dem Fluidisierungsboden 4b auf (vergleiche Figur 1). Die erfindungsgemäße Einheit kann als Serienverpackung für Pulverlacke dienen, das heißt Pulverlacke können in solchen Einheiten gelagert und transportiert werden. Wenn der Pulverlack verarbeitet werden soll, kann durch Öffnung der Kartonage und des Kunststoffbeutels sowie Anschließen der Zuführleitung an Druckluft ohne aufwendige Umfüllprozesse und ohne örtliche Einschränkungen direkt mit der Verarbeitung begonnen werden, beispielsweise durch über eine Förderung des fluidisierten Pulvers in eine Applikationsanlage wie einer Pulverpistole.

Gegenstand der vorliegenden Erfindung ist somit auch ein Verfahren zur Verarbeitung eines pulverförmigen Mediums, insbesondere eines Pulverlacks, bei dem ein in einer erfindungsgemäßen Fluidisierungseinheit angeordneter Pulverlack in der Einheit fluidisiert wird, der fluidisierte Pulverlack aus der Einheit in eine Applikationsanlage gefördert wird und auf ein Substrat appliziert wird, wobei innerhalb des Verfahrens kein Umfüllprozess des Pulverlacks stattfindet.

Ebenfalls Gegenstand der vorliegenden Erfindung ist die Verwendung einer erfindungsgemäßen Einheit zum gleichzeitigen Transport, Lagerung und Fluidisierung eines pulverförmigen Mediums, insbesondere eines Pulverlacks. Der Ausdruck gleichzeitig ist hier nicht als zeitgleich zu verstehen, sondern bringt zum Ausdruck, dass alle genannten Prozesse, das heißt Transport, Lagerung und Fluidisierung innerhalb der Einheit stattfinden, ohne dass intermediäre Umfüllprozesse stattfinden.

## Patentansprüche

1. Fluidisierungseinheit umfassend
eine Kartonage (2), ein innerhalb der Kartonage (2) angeordneter verformbarer Behälter (3) sowie eine innerhalb des verformbaren Behälters (3) angeordnete Fluidisierungsvorrichtung (4), welche ein Behältnis (4a) und einen das Behältnis (4a) abdeckenden Fluidisierungsboden (4b) umfasst, wobei das Behältnis (4a) und der Fluidisierungsboden (4b) die Außenwände eines Druckraums (4c) darstellen, welcher mit Druckluft beaufschlagbar ist, und wobei die Fluidisierungsvorrichtung (4) ferner eine Zuführleitung (4d) für Druckluft, welche über den Fluidisierungsboden in den Druckraum mündet, sowie eine den Behälter (4a) umspannende Dichtung (4e), die so ausgestaltet ist, dass der Innenraum (5) des verformbaren Behälters (3) in zwei voneinander getrennte Bereiche (5a) und (5b) getrennt ist, umfasst.

2. Fluidisierungseinheit nach Anspruch 1, **dadurch gekennzeichnet, dass** die Kartonage (2) eine Kartonverpackung ist.

3. Fluidisierungseinheit nach Anspruch 1 oder 2, **dadurch gekennzeichnet, dass** die Kartonage (2) quaderförmig ist.

4. Fluidisierungseinheit nach einem der Ansprüche 1 bis 3, **dadurch gekennzeichnet, dass** der verformbare Behälter (3) ein Kunststoffbeutel ist.

5. Fluidisierungseinheit nach einem der Ansprüche 1 bis 4, **dadurch gekennzeichnet, dass** die Fluidisierungsvorrichtung (4) auf dem Boden der Kartonage (2) steht, wobei zwischen der Unterseite der Vorrichtung (4) und der Oberseite des Bodens der Kartonage (2) der verformbare Behälter (3) angeordnet ist.

6. Fluidisierungseinheit nach einem der Ansprüche 1 bis 5, **dadurch gekennzeichnet, dass** das Behältnis (4a) formstabil ist und aus einem thermoplastischen Kunststoff besteht.

7. Fluidisierungseinheit nach einem der Ansprüche 1 bis 6, **dadurch gekennzeichnet, dass** das Behältnis (4a) ein quaderförmiger Kasten ist, bei dem die obere Fläche ausgespart ist, wobei der Fluidisierungsboden (4b) den Bereich der ausgesparten Fläche abdeckt.

8. Fluidisierungseinheit nach einem der Ansprüche 1 bis 7, **dadurch gekennzeichnet, dass** der Fluidisierungsboden (4b) als poröses Material poröse Polyolefine, poröse Metallsinterstoffe, poröse Keramiken, poröse Duroplasten, poröse mineralische Werkstoffe und/oder poröse organische Werkstoffe wie Cellulose-basierte poröse Werkstoffe, bevorzugt poröse Polyolefine, insbesondere poröses Polyethylen, umfasst.

9. Fluidisierungseinheit nach einem der Ansprüche 1 bis 8, **dadurch gekennzeichnet, dass** die Dichtung (4e) geschäumte flexible Polyurethane, Synthesekautschuk, Naturkautschuk, geschäumte flexible Polyolefine und/oder schäumbare flexible Duroplasten umfasst.

10. Fluidisierungseinheit nach einem der Ansprüche 1 bis 9, **dadurch gekennzeichnet, dass** sie innerhalb des verformbaren Behälters und oberhalb der Dichtung (4e) sowie auf dem Fluidisierungsboden aufliegend ein pulverförmiges Medium umfasst.

11. Fluidisierungseinheit nach Anspruch 10, **dadurch gekennzeichnet, dass** das pulverförmige Medium ein Pulverlack ist.

12. Verfahren zur Verarbeitung eines pulverförmigen Mediums, bei dem ein in einer Fluidisierungseinheit nach einem der Ansprüche 1 bis 9 angeordnetes pulverförmiges Medium in der Einheit fluidisiert wird, das fluidisierte Medium aus der Einheit in eine Applikationsanlage gefördert wird und anschließend auf ein Substrat appliziert wird, wobei innerhalb des Verfahrens kein Umfüllprozess des Mediums stattfindet.

13. Verfahren nach Anspruch 12, **dadurch gekennzeichnet, dass** das pulverförmige Medium ein Pulverlack ist.

14. Verwendung einer Fluidisierungseinheit nach einem der Ansprüche 1 bis 9 sowohl zum Transport und zur Lagerung als auch zur Fluidisierung eines pulverförmigen Mediums, insbesondere eines Pulverlacks, wobei während des Transports, der Lagerung und der Fluidisierung keine intermediären Umfüllprozesse stattfinden.
